(19) Europäisches Patentamt
European Patent Office
Office européen des brevets

(11) Veröffentlichungsnummer : **0 398 128 B1**

# (12) EUROPÄISCHE PATENTSCHRIFT

(45) Veröffentlichungstag der Patentschrift :
**02.12.92 Patentblatt 92/49**

(51) Int. Cl.[5] : **B01J 37/02,** B05C 5/00

(21) Anmeldenummer : **90108635.5**

(22) Anmeldetag : **08.05.90**

(54) **Vorrichtung und Verfahren zur gleichmässigen Beladung ein stückiger Trägerkörper mit einer definierten Stoffmenge aus Dispersonen oder Lösungen.**

(30) Priorität : **13.05.89 DE 3915685**

(43) Veröffentlichungstag der Anmeldung :
**22.11.90 Patentblatt 90/47**

(45) Bekanntmachung des Hinweises auf die Patenterteilung :
**02.12.92 Patentblatt 92/49**

(84) Benannte Vertragsstaaten :
**BE DE FR GB IT LU SE**

(56) Entgegenhaltungen :
**US-A- 3 616 049**
**US-A- 4 039 482**
**US-A- 4 208 454**

(73) Patentinhaber : **Degussa Aktiengesellschaft**
**Weissfrauenstrasse 9**
**W-6000 Frankfurt am Main 1 (DE)**

(72) Erfinder : **Baumgartner, Wilfried**
**Schmiederain 8**
**W-7888 Rheinfelden (DE)**
Erfinder : **Schäuble, Bernhard**
**Liebenbergstrasse 18**
**W-7888 Rheinfelden (DE)**

EP 0 398 128 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft zunächst Vorrichtungen zur gleichmäßigen Beladung einstückiger keramischer oder metallischer Trägerkörper, insbesondere für Katalysatoren, mit einer gewünschten Stoffmenge aus Dispersionen oder Lösungen und Arbeitsverfahren für den Betrieb der Vorrichtungen, vor denen eine erste, aufwendigere automatisierbar und eine zweite, eine Vereinfachung der ersten, teilautomatisierbar bzw. von Hand bedienbar ist. Sie betrifft weiterhin Arbeitsverfahren für die Vorrichtungen und deren vorzugsweise Abwandlungen.

Unter einem einstückigen Trägerkörper versteht man z. B. monolithische Trägerkörper mit durchgehend oder abwechselnd an beiden Stirnseiten einseitig verschlossenen Strömungskanälen (Dieselfilter). Darunter zählen auch geschäumte Körper oder Körper aus gepreßtem Fasergestrick oder gepreßten Fasermatten.

Zur Beladung solcher Trägerkörper mit Dispersionen oberflächenvergrößernder Metalloxide und/oder Lösungen von katalytisch aktiven Metallsalzen wurden diese bisher in einem Überschuß von Dispersion bzw. Lösung getaucht oder mit einem Überschuß derselben durchspült oder besprüht. Dabei nahmen die Trägerkörper entsprechend ihrer individuellen maximalen Aufnahmekapazität immer unterschiedliche Stoffmengen auf, was für die Produktion einheitlicher Katalysatoren von Nachteil ist.

Der Erfindung liegt daher die Aufgabe zugrunde, eine gewünschte gleichmäßige Beladung einer Serie von Trägerkörpern im Beladungsbereich unterhalb der niedrigsten maximalen Einzelaufnahmekapazität innerhalb einer Menge von zu belegenden Körpern zu erzielen und diese Aufgabe mit einer geeigneten Vorrichtung und passenden Verfahrensmaßnahmen zu lösen.

Ein Gegenstand der Erfindung betrifft Vorrichtungen zur gleichmäßigen Beladung einstückiger keramischer oder metallischer Trägerkörper, insbesondere für Katalysatoren, mit einer gewünschten Stoffmenge aus Dispersionen oder Lösungen. Sie sind in den Ansprüchen 1 bis 4 gekennzeichnet.

Anspruch 2 definiert eine konstruktiv gegenüber der Vorrichtung von Anspruch 1 vereinfachte Ausführungsvariante, die Ansprüche 3 und 4 sind auf vorteilhafte Ausführungsformen der aufwendigeren und der einfacheren Konstruktion gerichtet.

Die zur Beschreibung der Vorrichtung gemäß Erfindung verwendeten Bezugsziffern beziehen sich auf Figur 1 und 2 (vereinfachte Konstruktion gemäß Anspruch 2) der Zeichnung.

Ein wesentlicher Bestandteil der erfindungsgemäßen Vorrichtung ist die in Figur 3 gezeigte Konstruktion des Verteilerbodens in Form zahlreicher, mit Bohrungen versehener Ablaufnasen, welche das Zusammenlaufen der verteilten Flüssigkeit auf der Verteilerboden-Unterseite verhindern.

Da beispielsweise auch sehr feinzellige monolithische Katalysatorträger erfindungsgemäß gleichmäßig und definiert beladen werden sollen und die Verteilerboden-Unterseite aus fertigungstechnischen Gründen nur eine begrenzte Anzahl Ablaufnasen aufnehmen kann, wurde nach Mitteln gesucht, mit denen jeder Kanaleinlaß des Monolithen im Verlaufe des Beladungsvorgangs wenigstens einmal, vorzugsweise mehrmals, direkt unter eine der Tropfnasen gelangt.

Eine zweckmäßige Ausgestaltung der erfindungsgemäßen Vorrichtung sieht daher für die Behandlung rotationssymmetrischer Träger die in Anspruch 4 angegebenen Merkmale vor. Der in Anspruch 4 erwähnte Ring aus elastischem Material oder Gummibelag dient dazu, Übertragung von Trägerschwingungen auf den Verteilerboden zu vermeiden.

Ein weiterer Gegenstand der Erfindung sind Arbeitsverfahren mit verschiedenen Varianten zum Betrieb der erfindungsgemäßen Vorrichtung in ihrer aufwendigeren (Anspruch 5) und der einfacheren Konstruktion (Anspruch 6).

Bei dem in Anspruch 5 angegebenen Verfahren ist empfehlenswert, nach Eingeben von Dispersion bzw. Lösung in den Verteilerkopf und Abstellen des Vakuums zunächst leichten Überdruck anzulegen und das eingegebene flüssige Medium dann durch gezieltes Nachstellen des Überdrucks mit einer geeigneten Geschwindigkeit zur unteren Trägerstirnfläche vorwärts zu bewegen.

Bei Variante b) von Anspruch 5 wird der Träger mittels der ihn aufnehmenden Tasse nur soweit in Richtung des Verteilerkopfes nach oben gefahren, daß sich seine obere Stirnfläche knapp im Abstand unter dem Dichtmittel 6′ befindet, dieses also nicht berührt. Hierdurch wird eine Übertragung von Drehungen oder Schwingungen auf den Verteilerkopf vermieden. Weiter besteht die Möglichkeit, durch impulsartiges Anlegen von Vakuum (17) oder Überdruck die Dispersion oder Lösung in den Trägerkanälen hin und her zu schieben. Hierdurch kann die Verteilung in der Trägerlängsachse gesteuert werden.

Der rotationssymmetrische Träger kann also während der Beaufschlagung mit Dispersion bzw. Lösung z. B. gedreht werden. Sofort oder nach einem Zeitintervall wird die Bewegung beendet, der Träger durch Hochfahren von Tasse (2) mittels des Dichtmittels 6′ abgedichtet und die Flüssigkeit oder Dispersion durch Anlegen eines gezielten Überdrucks über 16 in Richtung der unteren Stirnfläche geschoben bzw. durch periodisches Anlegen von Über- und Unterdruck, gegebenenfalls zeitverzögert, über die Längsachse des Trägers verteilt.

Nach einem Warteintervall wird die Abdichtung (6,6′) gelöst, der Träger mit der Tasse nach unten gefahren und der belegte Träger entnommen.

Diese grundsätzlich für die meisten Trägertypen ausreichende Methodik kann verfeinert werden, indem der Träger gegenüber dem Verteilerkopf während der Beladung in einfache oder oszillierende Rotation (nur bei Variante b) von Anspruch 5 anwendbar) und/oder in geradlinige oszillierende Schwingbewegungen entlang der x- und y-Achse versetzt wird.

Das erfindungsgemäße Verfahren kann nach Anspruch 8 weiter dadurch differenziert werden, indem bei hoher Beladungsgeschwindigkeit an der unteren Trägerstirnseite austretende Dispersion oder Flüssigkeit über Stutzen 3 und eine Pumpe auf den Verteilerkopf zurückgeführt wird bzw. bei Kleinmengen der mit einem Schwammtuch belegte Boden der Tasse 2 gegen die untere Stirnseite gedrückt wird, wobei der Träger den Rest aufnimmt. Hierbei bleibt der Hahn im Ablaufstutzen 3 der Ausführungsform gemäß Anspruch 1 geschlossen.

Die Wirkung der erfindungsgemäßen Verfahrensmaßnahmen lassen sich dahin zusammenfassen, daß unbelegte oder bereits mit einem Oxidüberzug versehene einstückige Träger von der oberen Stirnseite her mittels eines die genannte Stirnseite beaufschlagenden, einen sehr wesentlichen Teil der Erfindung darstellenden Verteilerbodens mit Dispersion oder einer Imprägnierflüssigkeit gleichmäßig beladen werden. Volumina und Konzentrationen der aufzubringenden Dispersion oder Imprägnierflüssigkeit können dabei so vorgegeben werden, daß eine beliebige gewünschte Beladung einer Serie von Trägern bei bzw. unterhalb der gegebenen niedrigsten maximalen Einzelaufnahmekapazität erzielt wird.

Der Beaufschlagungsgeschwindigkeit kommt eine wichtige Funktion zu, da insbesondere bei porösen Trägerkörpern der Aufsaugvorgang eine bestimmte Zeit benötigt. Sie kann gesteuert werden durch

a) den freien Querschnitt im Lochboden
b) den Loch-Durchmesser
c) den auf die Flüssigkeit wirkenden Gasdruck über dem Verteilerboden,
d) den auf der Loch-Austrittsseite gegenwirkenden Gasdruck und
e) den am Trägerende angelegten Unterdruck

und stellt eine gleichmäßige Längsverteilung der Beladung über den Träger sicher.

Die Verteilung über die Querschnittsfläche wird beeinflußt durch

a) die Zahl der Löcher im Lochboden pro Fläche
b) Bewegungen des Trägerkörpers während der Aufgabe der Dispersion oder Lösung bei stehendem Verteilerkopf und Lochboden oder, apparativ aufwendiger, einem Bewegen des Verteilerbodens bei stehendem Verteilerkopf und Trägerkörper, wobei auch Bewegungsgeschwindigkeit und Anordnung der Löcher in radialer Richtung unter Vermeidung von Kreislinien und Bevorzugung quadratischer Löcheranordnung Einfluß haben sowie
c) eine rotierende oder rotierend oszillierende und/oder eine seitlich oszillierende Bewegung eines Trägerkörpers gegenüber einem ruhenden Verteilerkopf in x- und y-Richtung.

Die Erfindung wird nachfolgend anhand einiger Ausführungsbeispiele in Verbindung mit Figuren 1 - 10 der Zeichnung weiter erläutert.

Figur 1 zeigt einen Schnitt durch eine erfindungsgemäße Vorrichtung einer 1. Ausführungsvariante
Figur 2 zeigt einen Schnitt ähnlich der Figur 1 in einer 2. Ausführungsvariante
Figur 3 zeigt eine vergrößerte Detailansicht auf einen Verteilerboden nach Fig. 1 und 2 von unten
Figur 3 a zeigt einen Schnitt gemäß der Linie IIIa - IIIa in Figur 3a
Figuren 4 - 6 zeigen diejenigen Bahnen auf der oberen Trägerstirnfläche, welche von den austretenden Flüssigkeitstropfen bei unterschiedlichen Relativbewegungen zwischen bewegtem Träger und einer einzelnen Tropfnase des Verteilerbodens bestrichen werden;
Figur 4 zeigt einfache Rotation;
Figur 5 zeigt oszillierende Bewegung in x- und y-Richtung (nach DIN 5, Teil 10, Seite 2 );
Figur 6 zeigt einfache Rotation mit oszillierender Bewegung in y-Richtung;
Die Figuren 7 - 10 zeigen Verteilungen von Beschichtungs- bzw. Imprägnierstoffen, welche nach den Beispielen 1 und 2 aufgebracht wurden.

<u>Beispiel 1</u>

**Einsatz der Belegungseinrichtung gemäß Figur 1 mit Ausführung des Lochbodens gemäß Figur 3**

Ein keramischer Trägerkörper aus Cordierit mit

| | |
|---|---|
| Durchmesser: | 143,mm |
| Länge: | 152,4 mm |

Zelldichte: 62 Zellen/$cm^2$
Wandstärke: 0,165 mm
und einer Oxidbeschichtung von
280 g $Al_2O_3$
48 g $CeO_2$
24 g $ZrO_2$
11 g $Fe_2O_3$
wurde mit 310 ml eines Lösungsgemisches von $H_2PtCl_6$ und $RhCl_3$, welches 11,77 g Pt und 2,35 g Rh/l enthielt, imprägniert.

Der Arbeitsablauf war folgender:

- obere Stirnseite des Trägers 1 (S 1) zur EM-Verteilung mit 40 ml $H_2O$ vorbelegen;
- Träger auf Auflage 4 in Tasse 2 stellen;
- Tasse 2 soweit noch oben fahren, daß S 1 knapp unter Dichtmittel 6′ liegt, (Dichtmittel 5,5′ werden nicht benutzt);
- Verteilerkopf 7 über Stutzen 17 leicht evakuieren; (60 mm WS Unterdruck)
- über Stutzen 14 310 ml EM-Lösung zufließen lassen;
- Tasse und Träger mit 120 Upm drehen;
- Stutzen 17 schließen und gleichzeitig Stutzen 16 öffnen;
- Lösung mit leichtem Überdruck (0,5 bar) innerhalb von 1 - 2 sec. über Verteilerboden 8 (Lochdurchmesser 0,8 mm, Lochteilung 5 mm) auf die Stirnfläche S 1 aufgeben;
- Drehung abstellen;
- nach einer Wartezeit von 5 sec. Träger gegen Verteilerkopf drücken - Dichtmittel 6′ wird wirksam;
- über Stutzen 16 und Verteilerboden 8 Überdruck auf S 1 wirken lassen (Lösung in den Kanälen wird nach unten in Richtung Tasse 2 geschoben);
- Schiebezeit durch abwechselndes Öffnen und Schließen von Hahn 16 und 17 verlängern (hierbei wird abwechselnd Über- und Unterdruck angelegt);
- nach 15 sec. Hahn 16 und 17 schließen Dichtmittel 6′ löst sich;
- belegten Träger entnehmen;

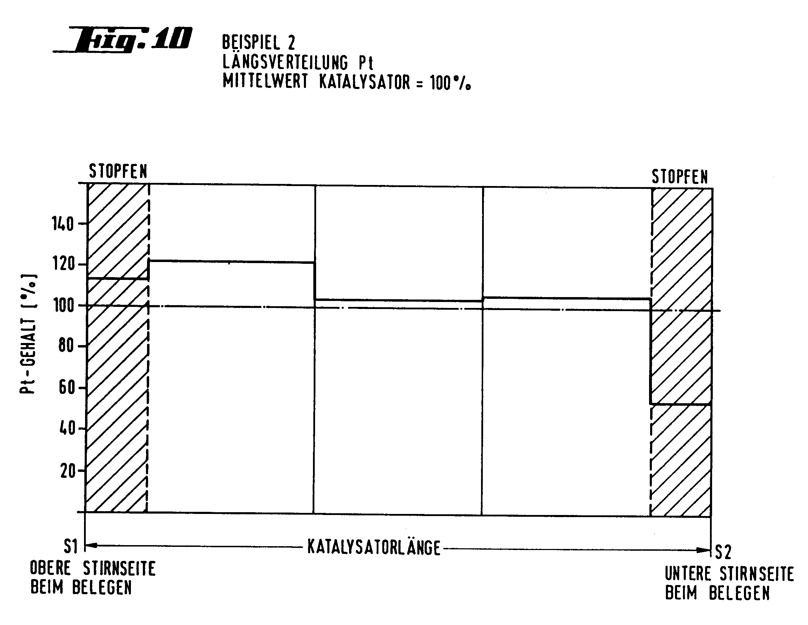

Im Durchlauftrockner auf unterer Stirnfläche S 2 stehend bei 100° C durchströmend trocknen;
Edelmetall-Verteilung:
Längsachse - siehe Fig. 7
radial - siehe Fig. 8, wobei Fig. 8a die Lage der
Bohrkerne K1 - K4 im Träger 1 schematisch darstellt

Die aufgegebene Lösungsmenge (Vorbelegungs-$H_2O$ + EM-Lösung) betrug 85 % der Wasseraufnahmekapazität.

Beispiel 2

**Einsatz der vereinfachten Belegungseinrichtung gemäß Figur 2 mit Ausführung des Lochbodens gemäß Figur 3:**

Ein keramischer Dieselpartikelfilter der Firma NGK mit
Durchmesser: 143,8 mm
Länge: 152,4 mm
Zelldichte: 15,5 Zellen/$cm^2$
Wandstärke: 0,64 mm
und abwechselnd auf der Vorder- und Rückseite 15 mm tief verschlossenen Kanälen, war mit 60 g $V_2O_5$ vorbeschichtet.

**Durchführung einer $TiO_2$-Belegung**

Hierzu wurde der Träger 1 in Tasse 2 gestellt, der Verteilerkopf 7 mit Dichtmittel 6′ aufgesetzt und 430 ml einer $TiO_2$-Dispersion, die 60 g $TiO_2$ enthielt, in den Verteilerkopf gegossen. Die Dispersion lief innerhalb von 15 - 18 sec. durch den Lochboden 8 auf die obere Stirnfläche des Trägers und verteilte sich dann über dessen gesamte Länge.

Der verwendete Lochboden hatte 1,2-mm Löcher und eine Lochteilung von 10 mm, entsprechend 1 Loch/$cm^2$. Die Wasseraufnahmekapazität wurde zu 85 % ausgenutzt.

$TiO_2$-Verteilung - siehe Fig. 9

Die belegten Träger wurden 2 h bei 300° C getrocknet und nach Abkühlung mit Edelmetall belegt.

**Durchführung der EM-Belegung**

Der zu belegende Träger 1 wurde in die Tasse 2 gestellt, in welche ein Schwammtuch 3′ gelegt war.

Der Verteilerkopf 7 wurde zusammen mit Dichtmittel 6′ aufgesetzt und 490 ml Tetraamminplatin(II)-hydroxid-Lösung mit 4,37 g Pt auf den Verteilerboden 8 gegossen. Die Lösung lief innerhalb von 12 sec. über den Verteilerboden (Fig. 3) auf die obere Trägerstirnseite und verteilte sich dann über die ganze Länge des Trägers.

Der verwendete Verteilerboden war derselbe wie bei der $TiO_2$-Belegung. Die Wasseraufnahmekapazität wurde zu 95 % ausgenutzt. Die belegten Träger wurden 2 h bei 300° C getempert.

Pt-Verteilung - siehe Fig. 10.

Beispiel 3

**Einsatz der Belegungseinrichtung gemäß Figur 1 mit Ausführung des Lochbodens gemäß Figur 3**

Ein keramischer Trägerkörper aus Cordierit mit

| | |
|---|---|
| Durchmesser: | 143,8 mm |
| Länge: | 152,4 mm |
| Zelldichte: | 62 Zellen/$cm^2$ |
| Wandstärke: | 0,165 mm |

wurde mit 900 g einer 56 %igen Oxid-Dispersion belegt, die nach Entfernen des Wassers und Tempern bei 300° C (30 Min.) folgende Oxidzusammensetzung hatte:

| | |
|---|---|
| 61,35 Gew.% | $Al_2O_3$ |
| 36,81 Gew.% | $CeO_2$ |
| 1,84 Gew.% | $ZrO_2$ |

**Durchführung der Belegung**

- Träger 1 auf Zungen 4 in Tasse 2 stellen;
- Tasse 2 soweit anheben, daß obere Stirnfläche knapp unter Dichtmittel 6′ liegt;
- in Verteilerkopf 7 über Stutzen 17 60 mm WS Unterdruck anlegen;
- über Stutzen 14 Dispersion in Verteilerkopf laufen lassen;
- Tasse mit Träger mit 42 Upm drehen;
- Stutzen 17 schließen und über Stutzen 16 1 bar Überdruck auf Verteilerkopf geben;
- Dispersion durch Lochboden 8 (1,2 mm-Löcher, 10 mm-Teilung) auf obere Stirnfläche S 1 drücken;
- Dispersion in 2 - 3 sec. aufgeben;
- Drehung beenden;
- Träger gegen Dichtmittel 6′ pressen;
- mit Anlegen von Überdruck Dispersion durch die Kanäle nach unten drücken und über die Länge des Trägers verteilen;

Der belegte Träger wurde auf der unteren Stirnfläche S 2 stehend 0,5 h bei 150° C luftdurchströmend getrocknet und anschließend getempert.

Zur Bestimmung der Oberflächenverteilung über die Länge wurde der Trägerkörper gedrittelt.

| | | | |
|---|---|---|---|
| Ergebnis: | oben | S 1 | 93,3 % |
| | Mitte | | 100,0 % |
| | unten | S 2 | 106,6 % |

Beispiel 4

**Einsatz von Belegungseinrichtung gemäß Figur 1 mit Ausführung des Lochbodens gemäß Figur 3**

Ein keramischer Trägerkörper aus Cordierit mit

| | |
|---|---|
| Durchmesser: | 143,8 mm |
| Länge: | 152,4 mm |

Zelldichte: 62 Zellen/cm²
Wandstärke: 0,165 mm
wurde mit 750 g einer Oxid-Dispersion belegt (= 83 % der Wasseraufnahmekapazität) und hatte nach Tempern bei den Bedingungen von Beispiel 3 folgende Oxidbeladung:

| | |
|---|---|
| 252 g | $Al_2O_3$ |
| 95 g | $CeO_2$ |
| 3 g | $ZrO_2$ |
| 350 g | Oxide |

Die Dispersionsbelegung wurde wie folgt durchgeführt:
- Träger 1 auf Zungen 4 in Tasse 2 gestellt;
- Tasse 2 auf Vibratortisch stehend nach oben gegen Dichtmittel 6′ gefahren;
- im Verteilerkopf 7 über Stutzen 17 15 mm WS Unterdruck angelegt;
- über Stutzen 14 Dispersion auf Verteilerboden 8 laufen lassen;
- Vibrator mit 50 Hz und 0,8 mm Amplitude laufen lassen (x-Richtung);
- Stutzen 17 und 18 schließen;
- über Stutzen 16 Luft mit 1,0 bar auf die Dispersion wirken lassen;
- Dispersion über Lochboden 8 (0,8 mm Löcher, 5 mm-Teilung) auf die obere Stirnfläche drücken;
- Dispersion in 10 - 15 sec. aufgeben;
- mit gleichem Luftdruck Dispersion über den Träger in Richtung untere Trägerstirnseite drücken;
- nach 10 sec. Luftzufuhr durch Stutzen 16 schließen;
- Vibrator abstellen;
- Tasse 2 nach unten fahren;
- Träger 1 entnehmen;
- Kanäle von unten in Richtung obere Trägerstirnseite leicht nachblasen
- Teil liegend von S 1 aus luftdurchströmend trocknen (120° C), anschließend bei 500° C 1 h tempern;

Erreichte Washcoatverteilung längs, Trägerkörper gedrittelt
350 g = 100 %

| | | |
|---|---|---|
| 99,3% | S 1 | oben |
| 99,9 % | | Mitte |
| 100,8 % | S 2 | unten |

**Washcoatverteilung radial in %:**

4 Kerne ∅ 25,4 mm in einem Lochkreis von 85 mm längs aus den gedrittelten Teilen gebohrt. Washcoataufnahme über Gewichtsverteilung bestimmt.

| Kern | oben | Mitte | unten |
|---|---|---|---|
| K 1 | 100,2 | 100,4 | 98,6 |
| K 2 | 99,2 | 98,3 | 98,2 |
| K 3 | 101,3 | 101,5 | 99,1 |
| K 4 | 98,8 | 100,0 | 103,0 |

Beispiel 5

**Einsatz der Belegungseinrichtung gemäß Figur 1 mit Ausführung des Lochbodens gemäß Figur 3**

Ein metallischer Trägerkörper der Firma Emitex

| | |
|---|---|
| Durchmesser: | 90 mm |
| Länge: | 74,5 mm |
| Zelldichte: | 62 Zellen/$cm^2$ |
| Wandstärke: | 0,05 mm |

war mit 40 g einer Vorbeschichtungsmasse belegt.

Der vorbelegte Träger wurde mit 130 g einer 53,8 %igen Oxid-Dispersion belegt (= 90 % der Wasseraufnahmekapazität) und hatte nach Trocknung und Temperung eine Oxidbelegung aus:

| | |
|---|---|
| 53,9 g | $Al_2O_3$, |
| 9,3 g | $CeO_2$, |
| 4,7 g | $ZrO_2$, |
| 2,1 g | $Fe_2O_3$. |

Die Beschichtung wurde wie folgt durchgeführt, wobei die Apparatur den Trägermaßen angepaßt war:

- Träger 1 auf Auflage 4 in Tasse 2 stellen;
- Tasse 2 hochfahren - Dichtmittel 6′ wird wirksam;
- über Stutzen 17 leichtes Vakuum anlegen (15 mm WS);
- Dispersion über 14 einlaufen lassen;
- Vibrator mit 50 Hz und 0,8 mm Amplitude auf Tasse wirken lassen (x-Richtung);
- Hahn 17 schließen und über Hahn 16 0,5 bar Überdruck anlegen;
- Dispersion über den Lochboden 8 (1,2 mm Löcher, 5 mm-Teilung) innerhalb von 2 sec. auf die obere Trägerstirnfläche drücken;
- nach Dispersionsaufgabe abwechselnd Hahn 17 und 16 öffnen und Washcoat zeitverzögert in Richtung untere Stirnfläche schieben;
- Vibrator abstellen, Hahn 16 und 17 schließen;
- Tasse 2 nach einer Wartezeit von 5 sec. nach unten fahren;
- mit Preßluft Washcoat von der unteren Stirnseite leicht nach oben verteilen:
- Teil auf der oberen Seite stehend, durchströmend bei 70 -150° C durch den Bandtrockner fahren und anschließend bei 500° C 1 h tempern.

Es wurde dieselbe optimale Längs- und Radialverteilung der Oxidbeschichtung wie in Beispiel 4 erzielt.

## Patentansprüche

1. Vorrichtung zur gleichmäßigen Beladung einstückiger keramischer oder metallischer Trägerkörper, insbesondere für Katalysatoren, mit einer gewünschten Stoffmenge aus Dispersionen oder Lösungen,
**gekennzeichnet durch**
eine der Außenkontur des Trägers (1) angepaßte und diesen im unteren Teil fassende, gegebenenfalls mit einem Schwammtuch ausgelegte Tasse (2) mit einem im Tassenboden angeordneten Auslaufstutzen (3), eine im Abstand vom Tassenboden am inneren Tassenmantel angebrachte, die untere Trägerstirnfläche am Rand stützende Ring- oder Zungenanordnung (4), gegebenenfalls Mittel (5,5′) zur Abdichtung des unterhalb der unteren Trägerstirnfläche liegenden Tassenraums gegenüber dem Trägermantel bzw. dem gestützten Teil der Stirnfläche in Form einer aufblasbaren Manschette (5) oder einem auf die Stützfläche(n) aufgelegten Dichtring (5′), einen an seinem unteren Ende mit einer aufblasbaren Innenmanschette (6) versehenen und damit einen oberen Mantelabschnitt des Trägers umgreifenden, ebenfalls der Außenkontur des Trägers entsprechenden Verteilerkopf (7), einen im unteren Abschnitt des Verteilerkopfes aber im Abstand von dessen Unterkante über den Verteilerkopfquerschnitt angeordneten Verteilerboden (8) mit Lochungen (9), dessen nach oben zeigende Fläche (10) plan ist und dessen nach unten zeigende Fläche um jede Auslaufmündung (11) herum unter Ausbildung jeweils einer nach unten vorspringenden Tropfnase (12) eingefräst ist, einen im Verteilerkopfmantel unterhalb des Verteilerbodens angeordneten Belüftungsstutzen (13), einen im Verteilerkopfmantel oberhalb des Verteilerbodens angeordneten Zulaufstutzen für Dispersion oder Lösung (14) und einen den Verteilerkopf nach oben luftdicht schließenden Deckel (15) mit einem Belüftungs- (16) und einem Vakuumstutzen (17) sowie einen seitlich unterhalb des Deckels angebrachten Stutzen (18) zur Druckmessung.

2. Vorrichtung nach Anspruch 1 in vereinfachter Ausführung,
**gekennzeichnet durch**
eine der Außenkontur des Trägers (1) angepaßte und diesen im unteren Teil fassende, gegebenenfalls mit einem Schwammtuch 3′ ausgelegte Tasse (2), einen mit seinem unteren Rand unter Zwischenlage eines ringförmigen Dichtmittels 6′ dem Rand der oberen Trägerstirnfläche aufsetzbaren, oben offenen Verteilerkopf (7) und einen im unteren Abschnitt des Verteilerkopfes aber im Abstand von dessen Unterkante über den Verteilerkopfquerschnitt angeordneten Verteilerboden (8) mit Lochungen (9), dessen nach oben zeigende Fläche (10) plan ist und dessen nach unten zeigende Fläche um jede Auslaufmündung (11) herum unter Ausbildung jeweils einer nach unten vorspringenden Tropfnase (12) eingefräst ist.

3. Vorrichtung nach Anspruch 1 oder 2,
**dadurch gekennzeichnet,**
daß der oberhalb der oberen Trägerstirnfläche liegende Mantelabschnitt des Verteilerkopfes unter Ausbildung einer gegebenenfalls mit einer Ringdichtung (6′) versehenen Stützfläche für den Rand der oberen Trägerstirnfläche zurückspringt, wobei der Rücksprung so bemessen ist, daß die effektiv zur Beaufschlagung mit Dispersion oder Lösung benötigte Stirnfläche freiliegt.

4. Vorrichtung nach den Ansprüchen 1 bis 3,
**dadurch gekennzeichnet,**
daß für rotationssymmetrische Träger der Verteilerkopf (7) gegen Drehung fixiert und die den Träger (1) haltende Tasse (2) mit Antrieben oder Vibratoren verbunden ist, welche eine einfache oder oszillierende Rotationsbewegung und/oder eine geradlinig oszillierende Schwingbewegung in der x- und y-Achse auf die Tasse (2) überträgt, wobei in allen Fällen, mit Ausnahme der einfachen Rotation, ein oberhalb der Dichtmittel (6,6′) und, falls gegeben, unterhalb des Stutzens (13) liegender Mantelabschnitt des Verteilerkopfes (7) über den gesamten Mantelumfang durch einen Ring aus elastischem Material, vorzugsweise in Form eines Gummibalgs, ersetzt ist.

5. Verfahren zum Betrieb der Vorrichtung nach den Ansprüchen 1, 3 oder 4,
**dadurch gekennzeichnet,**
daß man
a) den Träger (1) auf die Stützmittel (4) in die Tasse (2) stellt und gegebenenfalls die Abdichtung (5,5′) herstellt, den Verteilerkopf (7) auf den Träger setzt bzw. durch Hochfahren der Tasse (2) den Träger in den Verteilerkopf einfährt, dann die Abdichtung (6,6′) herstellt und den Belüftungshahn (13) schließt, über Stutzen (17) Vakuum anlegt, Dispersion bzw. Lösung über Stutzen (14) eingibt, dann das Vakuum abstellt und über Stutzen (16) belüftet bzw. Überdruck anlegt oder
b) den Träger (1) auf die Stützmittel (4) in die Tasse (2) stellt und gegebenenfalls die Abdichtung (5,5′) herstellt, den Träger durch Hochfahren der Tasse (2) mit seiner oberen Stirnfläche bis knapp unter das Dichtmittel 6′ schiebt, über Stutzen (17) Vakuum anlegt, Dispersion bzw. Lösung über Stutzen (14) eingibt, dann das Vakuum abstellt und über Stutzen (16) belüftet bzw. nach Herstellen der Abdichtung 6,6′ Überdruck anlegt
und mit den Maßnahmen nach a) oder b) jeweils die in Menge und Konzentration auf eine gewünschte Beladung im Rahmen der Aufnahmekapazität des Trägers abgestimmte Dispersion bzw. Lösung über den Verteilerboden auf den Träger aufbringt, nach einem Warteintervall gegebenenfalls die Manschette (6) und die Manschette (5) entspannt, den Verteilerkopf (7) hochfährt und den belegten Träger (1) entnimmt.

6. Verfahren zum Betrieb der vereinfachten Vorrichtung nach den Ansprüchen 2 bis 4,
**dadurch gekennzeichnet,**
daß man den Träger (1) in die Tasse (2) gegebenenfalls auf das Schwammtuch 3′, stellt, den Verteilerkopf (7) auf den Träger setzt und dabei die Abdichtung über Dichtmittel (6′) herstellt, Dispersion bzw. Lösung in den Verteilerkopf gießt und damit die in Menge und Konzentration auf eine gewünschte Beladung im Rahmen der Aufnahmekapazität des Trägers abgestimmte Dispersion bzw. Lösung durch die Schwerkraft über den Verteilerboden (8) auf den Träger aufbringt, wobei gegebenenfalls an der unteren Trägerstirnfläche austretende kleinere Mengen von Lösung oder Dispersion durch Andrücken der mit dem Schwammtuch 3′ ausgelegten Tasse (2) an die Trägerstirnfläche in den Träger zurückbefördert werden.

7. Verfahren nach den Ansprüchen 5 oder 6,
**dadurch gekennzeichnet,**
daß der Träger (1) gegenüber dem Verteilerkopf (7) während der Beladung in einfache Rotation oder in oszillierende Rotation und/oder in geradlinig oszillierende Schwingbewegungen in der x- und y-Achse versetzt wird.

8. Verfahren nach den Ansprüchen 5 oder 7,
**dadurch gekennzeichnet**,
daß bei hoher Beladungsgeschwindigkeit an der unteren Trägerstirnseite austretende Dispersion oder Flüssigkeit über Stutzen (3) und eine Pumpe auf den Verteilerboden zurückgeführt wird.

## Claims

1. A means for uniformly loading one-piece ceramic or metal carrier members, more particularly for catalysts, with a desired quantity of dispersions or solutions,
characterised by
a cup (2) matching the outer contour of the carrier (1) and holding the lower part thereof and optionally equipped with a sponge cloth and having an outlet pipe (3) disposed in its base, a ring or tongue arrangement (4) disposed at a distance from the base of the cup and on the inner casing thereof and supporting the edge of the bottom end of the carrier, optionally means (5, 5′), for sealing the interior of the cup below the bottom of the carrier from the carrier casing or the supported part of the bottom thereof, the last-mentioned means being in the form of an inflatable sleeve (5) or a sealing ring (5′) placed on the supporting surface or surfaces, a distributor head (7) likewise corresponding to the outer contour of the carrier and provided at its bottom end with an inflatable inner sleeve (6) for surrounding an upper casing portion of the carrier, a distributor tray (8) with perforations (9) disposed over the cross-section of the distributor head in the bottom portion thereof but at a distance from the bottom edge thereof, the top surface (10) of the tray being flat and the underside thereof being milled around each outlet mouth (11) to form respective downwardly projecting drip spouts (12), an aeration pipe (13) disposed in the jacket of the distributor head under the distributor tray, a dispersion or solution supply pipe (14) disposed in the distributor-head casing above the tray, and a cover (15) closing the distributor head at the top in airtight manner and comprising an aeration pipe (16), a negative-pressure pipe (17) and a pressure-measuring pipe (18) disposed at the side under the cover.

2. A simplified means according to claim 1,
characterised by
a cup (2) matching the outer contour of the carrier (1) and surrounding the lower part thereof and optionally provided with a sponge cloth (3′), an upwardly open distributor head (7) having its bottom edge adapted to be placed on the edge of the top surface of the carrier with interposition of an annular sealing means (6′), and a distributor tray (8) with perforations (9) disposed above the distributor-head cross-section in the lower portion thereof, but at a distance from its underside, the top surface (10) of the distributor tray being flat and its underside being milled around each outlet mouth (11) to form respective downwardly projecting drip spouts (12).

3. Means according to claim 1 or 2,
characterised in that
the portion of the distributor-head casing lying above the top surface of the carrier is recessed to form a surface, optionally provided with an annular seal (6'), for supporting the edge of the top surface of the carrier, the recess being dimensioned so as to expose the surface area actually required for supplying with dispersion or solution.

4. A means according to claims 1 to 3,
characterised in that
in the case of axially symmetrical carriers the distributor head (7) is non-rotatably secured and the cup (2) holding the carrier (1) is connected to drives or vibrators which transmit a simple or oscillating rotary motion and/or a rectilinear oscillating motion to the cup (2) along the x and y axis, and in all cases except for simple rotation, a portion of the casing of the distributor head (7) disposed above the sealing means (6, 6′) and below the pipe (13) if present, is replaced around the entire casing periphery by a ring of elastic material, preferably in the form of a rubber bellows.

5. A method of operating the means according to claim 1, 3 or 4,

characterised in that

(a) the carrier (1) is placed on the supporting means (4) in the cup (2) and, optionally, a seal (5, 5′) is made and the distributor head (7) is placed on the carrier or the cup (2) is raised so as to insert the carrier into the distributor head, after which a seal (6, 6′) is made and the aerating cock (13) is closed, negative pressure is applied through pipe (17), a dispersion or solution is supplied through pipe (14), and the negative pressure is cut off and the apparatus is aerated or pressurised via pipe (16) or

(b) the carrier (1) is placed on the supporting means (4 in the cup (2) and, if required, a seal (5, 5′) is made and the cup (2) is raised so that the top surface of the carrier is pushed close under the sealing means (6′), a negative pressure is applied through pipe (17), a dispersion or solution is supplied through pipe (14), the negative pressure is then switched off and the apparatus is aerated through pipe (16) or pressurised after making a seal (6, 6′),

and, by means of the features in (a) or (b) in each case the amount and concentration of dispersion or solution for the required loading within the capacity of the carrier is applied to the carrier through the distributor tray, the sleeve (6) and the sleeve (5) are released, after a residence interval if required, the distributor head (7) is moved upwards and the coated carrier (1) is taken out.

6. A method of operating the simplified means according to claims 2 to 4,
characterised in that
the carrier (1) is placed in the cup (2), optionally on the sponge cloth (3′), the distributor head (7) is placed on the carrier and sealed via the sealing means (6′), a dispersion or solution is poured into the distributor head and consequently the amount and concentration of dispersion or solution adapted to a desired load within the capacity of the carrier is applied by gravity to the carrier through the distributor tray (8), and any relatively small amounts of solution or dispersion flowing out of the bottom carrier surface are returned to the carrier by pressing the cup (2) equipped with the sponge cloth (3′) against the carrier surface.

7. A means according to claim 5 or 6,
characterised in that
during the loading process the carrier (1) is moved relative to the distributor head (7) in simple rotation or in oscillating rotation and/or in rectangular oscillating motion along the x and y axis.

8. A method according to claim 5 or 7,
characterised in that
any dispersion or liquid escaping from the underface of the carrier during high-speed loading is returned to the distributor tray by a pipe (3) and a pump.

## Revendications

1. Dispositif d'imprégnation uniforme de corps supports métalliques ou céramiques monoblocs, notamment pour des catalyseurs, avec une quantité souhaitée de substance à partir de dispersions ou de solution, caractérisé par une tasse (2) définie le cas échéant avec un tissu éponge, adaptée au contour extérieur du support (1) et qui le maintient à la partie inférieure, avec une tubulure d'écoulement disposée au fond de la tasse (3), un dispositif d'anneau ou de languette (4) soutenant la face frontale inférieure du support sur le bord, disposé sur l'enveloppe intérieure de la tasse à une certaine distance du fond de la tasse, le cas échéant des moyens (5, 5′) pour rendre étanche l'espace de la tasse situé en dessous de la surface frontale inférieure du support vis-à-vis de l'enveloppe du support ou de la partie soutenue de la face frontale sous la forme d'une manchette gonflable (5) ou d'un anneau d'étanchéité (5′) déposé sur la ou les surfaces d'appui, une tête de répartiteur (7) correspondant également au contour extérieur du support munie à son extrémité inférieure d'une manchette interne (6) gonflable et entourant ainsi une partie supérieure d'enveloppe du support, un fond répartiteur (8) avec des perforations (9), disposé sur la section transversale de la tête de répartiteur dans la partie inférieure de la tête de répartition mais à une certaine distance de son bord inférieur , dont la face (10) dirigée vers le haut est plane et dont la face dirigée vers le bas est fraisée autour de chaque débouché d'écoulement (11) en formant chaque fois un nez d'égouttage (12) en relief vers le bas, une tubulure d'alimentation en air (13) disposée en dessous du fond répartiteur dans l'enveloppe de tête de répartiteur, une tubulure d'alimentation en dispersion ou solution (14) disposée dans l'enveloppe de tête de répartiteur au-dessus du fond répartiteur et un couvercle (15) obturant la tête de répartiteur vers le haut étanche à l'air avec une tubulure (16) d'alimentation en air et une tubulure de vide (17) ainsi qu'une tubulure (18) disposée latéralement en dessous du couvercle pour la mesure de la pression.

2. Dispositif selon la revendication 1 en exécution simplifiée, caractérisé par une tasse (2) définie le cas échéant avec un tissu éponge (3'), adaptée au contour extérieur du support (1) et qui le maintient à la partie inférieure, une tête de répartiteur (7) ouverte vers le haut qu'on met en place avec son bord inférieur et interposition d'un joint annulaire d'étanchéité (6'), sur le bord de la face frontale supérieure du support et à la partie inférieure de la tête de répartition, mais écarté de son bord inférieur un fond répartiteur (8) avec des perforations (9) disposé sur toute la section transversale de la tête du répartiteur, dont la face (10) dirigée vers le haut est plane et dont la face dirigée vers le bas est fraisée autour de chaque orifice d'écoulement (12) pour former chaque fois un nez d'égouttage (12) en relief.

3. Dispositif selon la revendication 1 ou 2, caractérisé en ce que la partie d'enveloppe de la tête de répartiteur située au-dessus de la face frontale du support en formant une face d'appui munie le cas échéant d'un joint annulaire (6') présente un rebord pour le bord de la face frontale supérieure du support, le rebord étant dimensionné de telle façon qu'il libère la surface frontale nécessaire au contact efficace avec la dispersion ou la solution.

4. Dispositif selon les revendications 1 à 3, caractérisé en ce que pour des supports à symétrie de rotation, la tête de répartiteur (7) est empêchée de tourner et que la tasse (2) maintenant le support (1) est reliée à des moteurs ou des vibrateurs, qui transmettent à la tasse (2) un mouvement de rotation simple ou oscillante et/ou un mouvement vibratoire oscillant linéairement suivant l'axe des x et des y, avec dans tous les cas, sauf celui de la rotation simple, une partie d'enveloppe de la tête de répartiteur (7) située au-dessus du joint (6,6') et, le cas échéant en dessous de la tubulure (13), sur toute la périphérie de l'enveloppe, remplacée par un joint en matériau élastique, de préférence sous la forme d'un soufflet en caoutchouc.

5. Procédé pour faire fonctionner le dispositif selon les revendications 1, 3 ou 4, caractérisé en ce qu'on :
   a) pose le support (1) sur les moyens d'appui (4) dans la tasse (2) et le cas échéant on réalise l'étanchéité (5, 5'), on pose la tête de répartiteur (7) sur le support ou en remontant la tasse (2) on introduit le support dans la tête de répartiteur, ensuite on réalise l'étanchéité (6, 6') et on ferme le robinet d'arrivée d'air (13), on applique le vide pour la tubulure (17), on ajoute de la dispersion ou de la solution par la tubulure (14) puis on arrête le vide et on remet à l'air par la tubulure (16) ou on applique une surpression ou
   b) on pose le support (1) sur les moyens d'appui (4) dans la tasse (2) et le cas échéant on réalise l'étanchéité (5, 5'), on déplace le support en remontant la tasse (2) avec sa surface frontale supérieure qui arrive juste sous le joint (6'), on applique le vide par la tubulure (17), on ajoute la dispersion ou la solution par la tubulure (14), on arrête alors le vide et on remet à l'air par la tubulure (16) ou après réalisation de l'étanchéité (6, 6') on applique une surpression,

   et grâce aux disposition selon a) ou b), on réalise le dépôt souhaité en quantité et concentration dans le cadre de la capacité d'absorption du support en ajoutant la dispersion ou solution appropriée au support par l'intermédiaire du fond répartiteur, après un instant d'attente on supprime le cas échéant la contrainte sur la manchette (6) et la manchette (5), on soulève la tête de répartiteur (7) et enlève le support chargé (1).

6. Procédé pour faire fonctionner le dispositif simplifié selon les revendications 2 à 4, caractérisé en ce qu'on place le support (1) dans la tasse (2), le cas échéant sur le tissu éponge (3'), on pose la tête de répartiteur (7) sur le support et on réalise ainsi l'étanchéité par le joint (6'), on verse la dispersion ou la solution dans la tête de répartiteur, et ainsi la dispersion ou la solution appropriée en quantité et en concentration pour obtenir le dépôt souhaité dans le cadre de la capacité d'absorption du support, se dépose sous l'effet de la pesanteur via le fond répartiteur (8) sur le support, en recyclant le cas échéant à la surface frontale inférieure du support dans le support des petites quantités de solution ou de la dispersion sortant sous la face frontale inférieure du support, par suite de la pression de la tasse (2) recouverte du tissu éponge (3')

7. Procédé selon les revendications 5 ;ou 6, caractérisé en ce qu'on déplace le support (1) par rapport à la tête de répartiteur (7) pendant le dépôt par rotation simple ou par rotation oscillante et/ou par des mouvements alternatifs oscillants linéaires suivant les axes x et y.

8. Procédé selon les revendications 5 ou 7, caractérisé en ce que sous forte vitesse de charge, on recycle à l'aide d'une pompe sur le fond répartiteur la dispersion ou le liquide sortant à la face frontale inférieure de support par la tubulure (3).

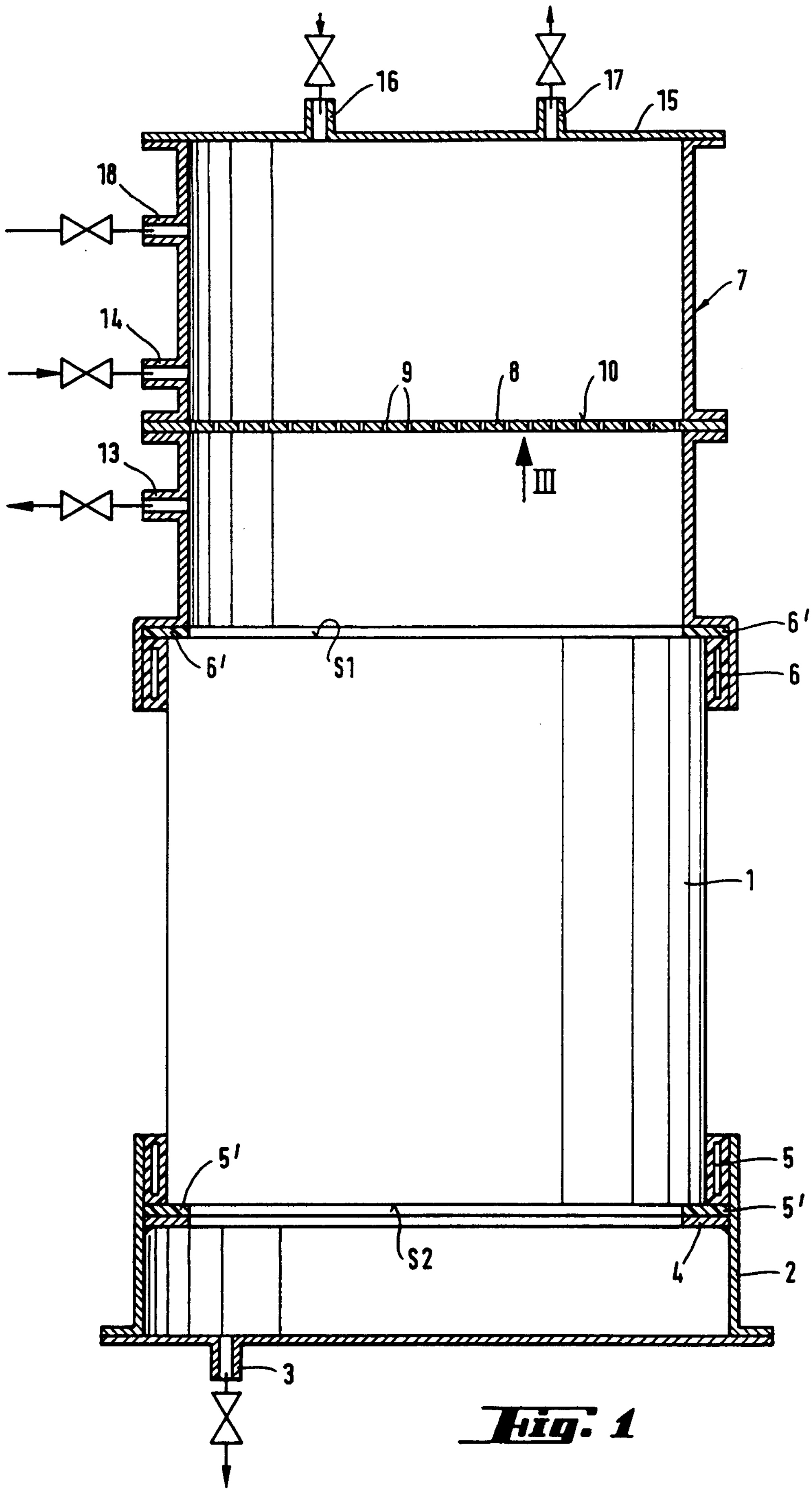


Fig. 1

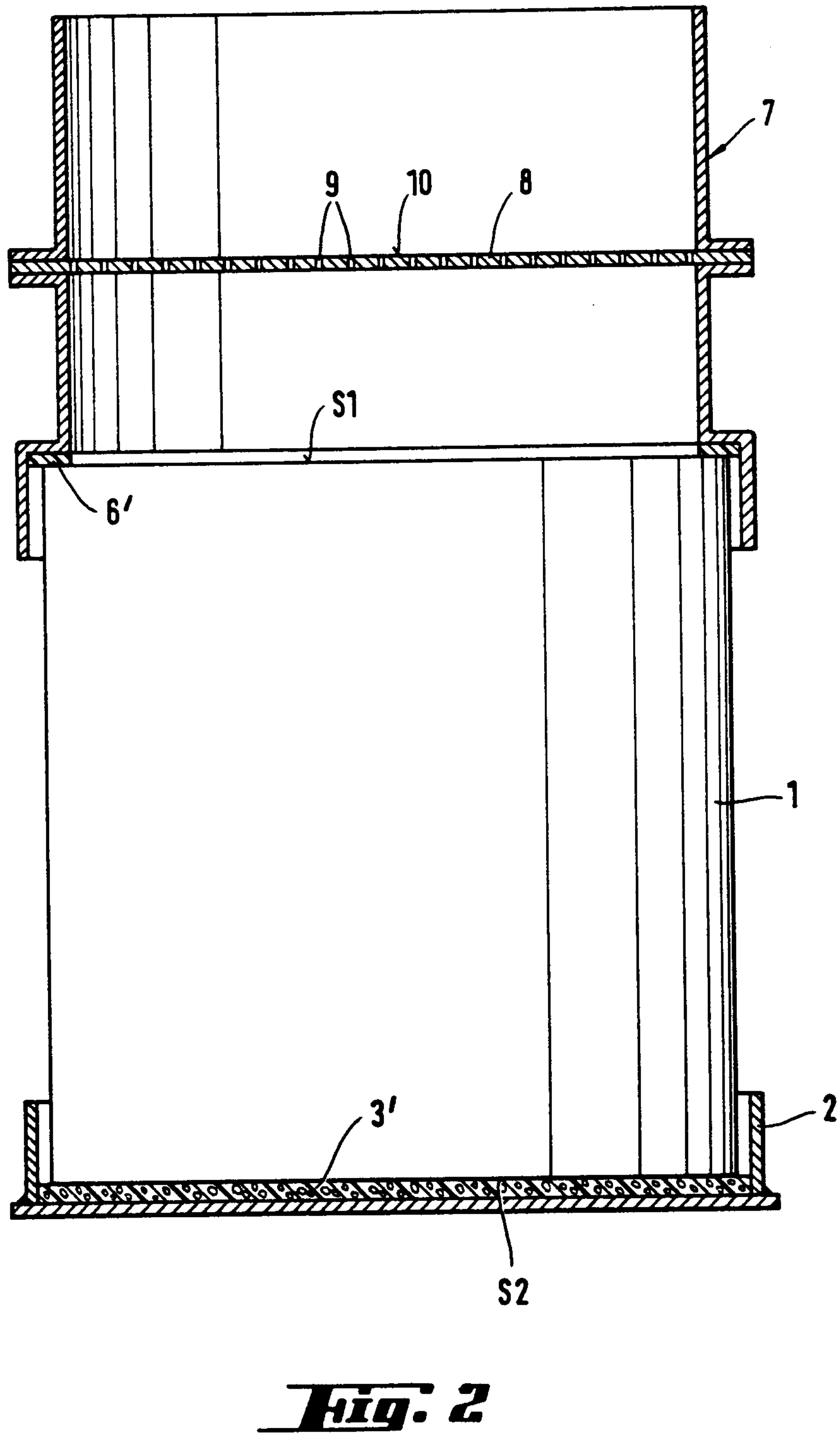


Fig. 2

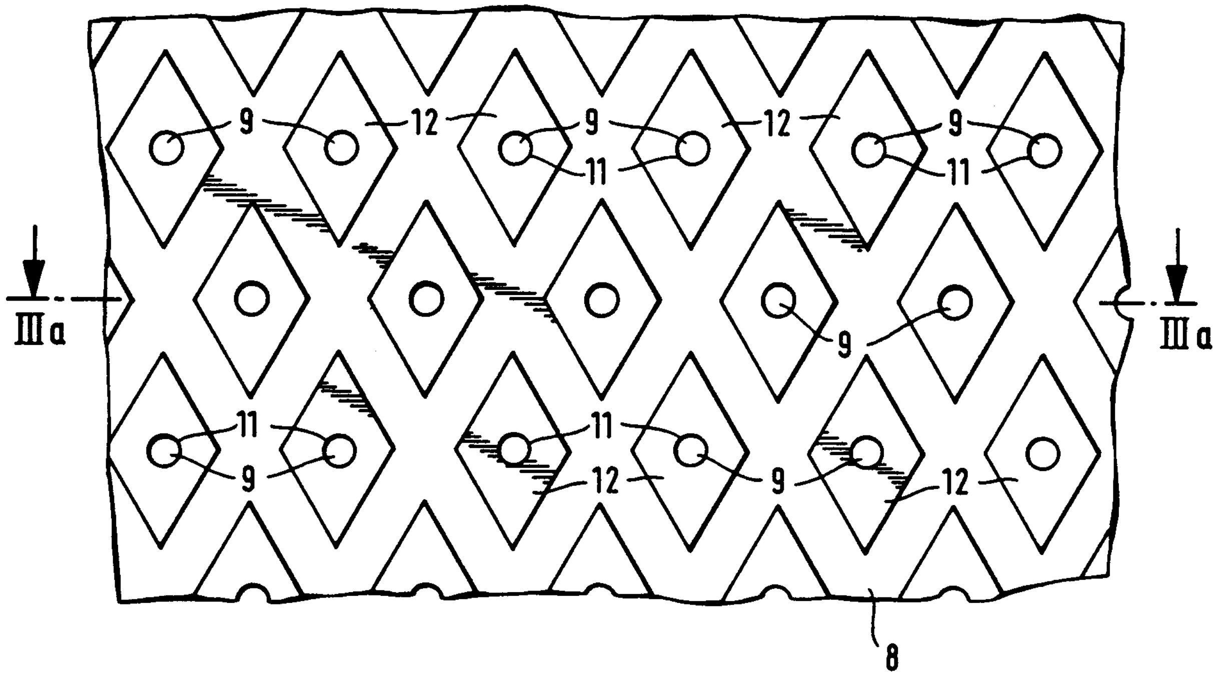
9
12
9
12
9
11
11
IIIa
IIIa
9
11
11
9
9
12
9
12
8

Fig. 3

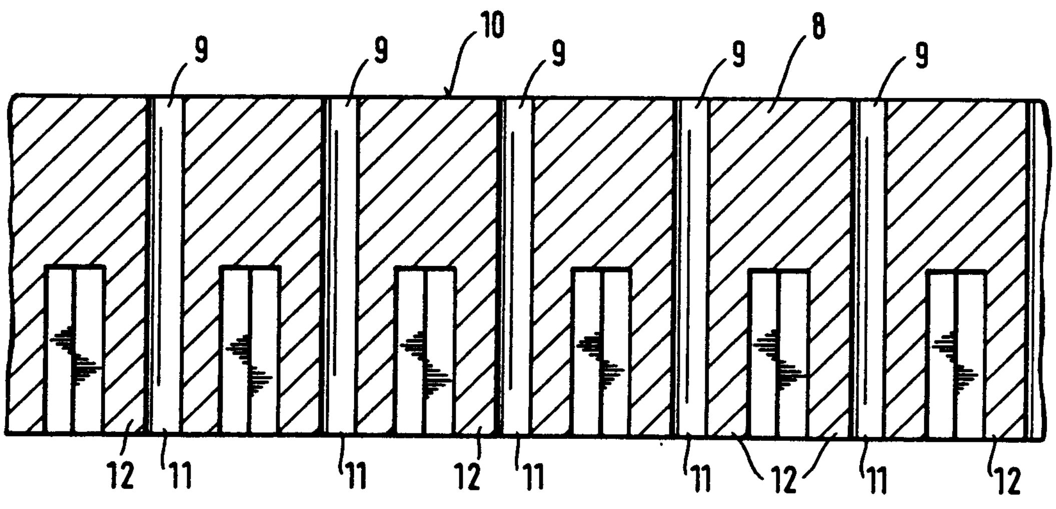
9
9
10
9
9
8
9
12
11
11
12
11
11
12
11
12

Fig. 3a

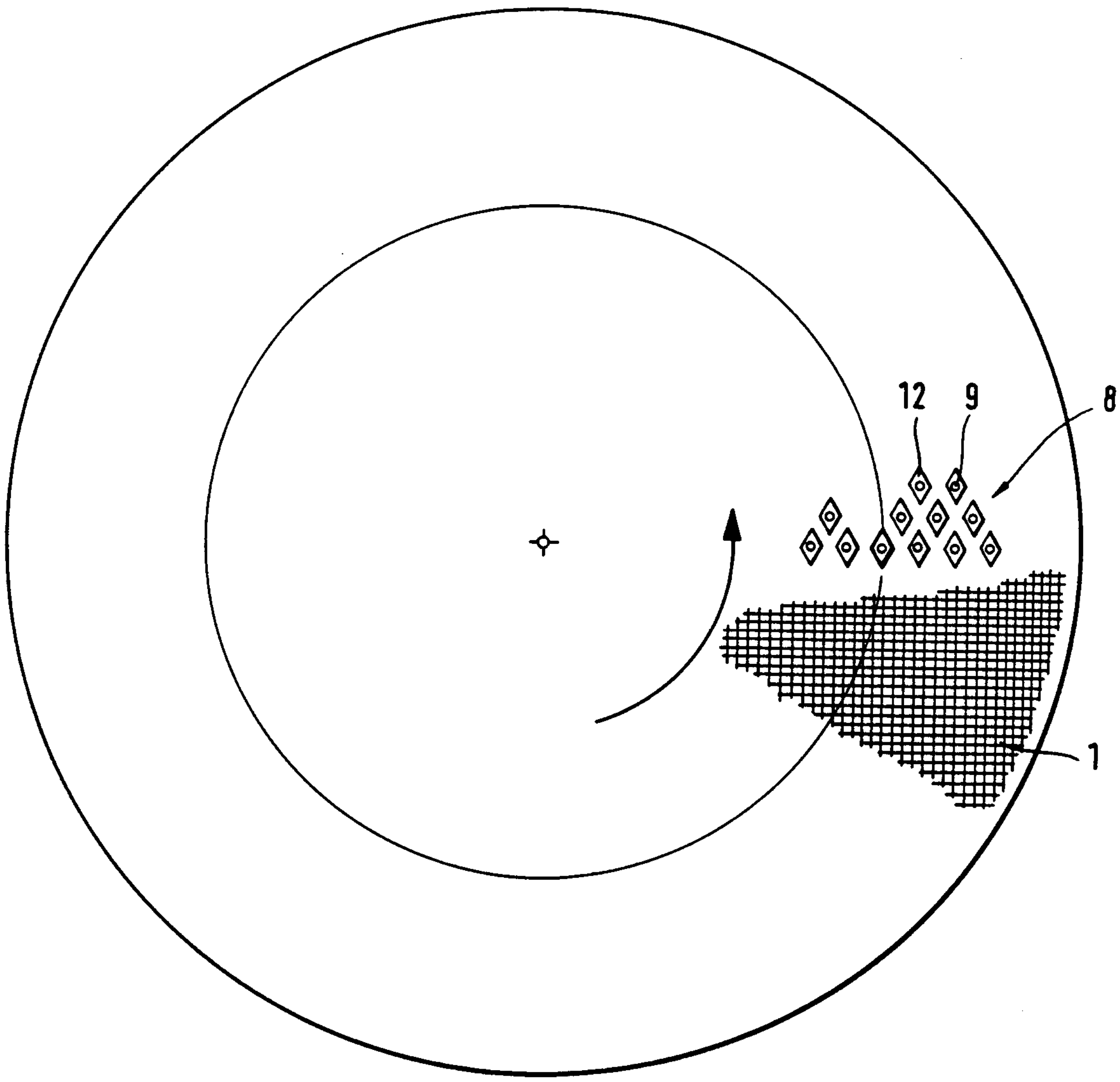


Fig. 4

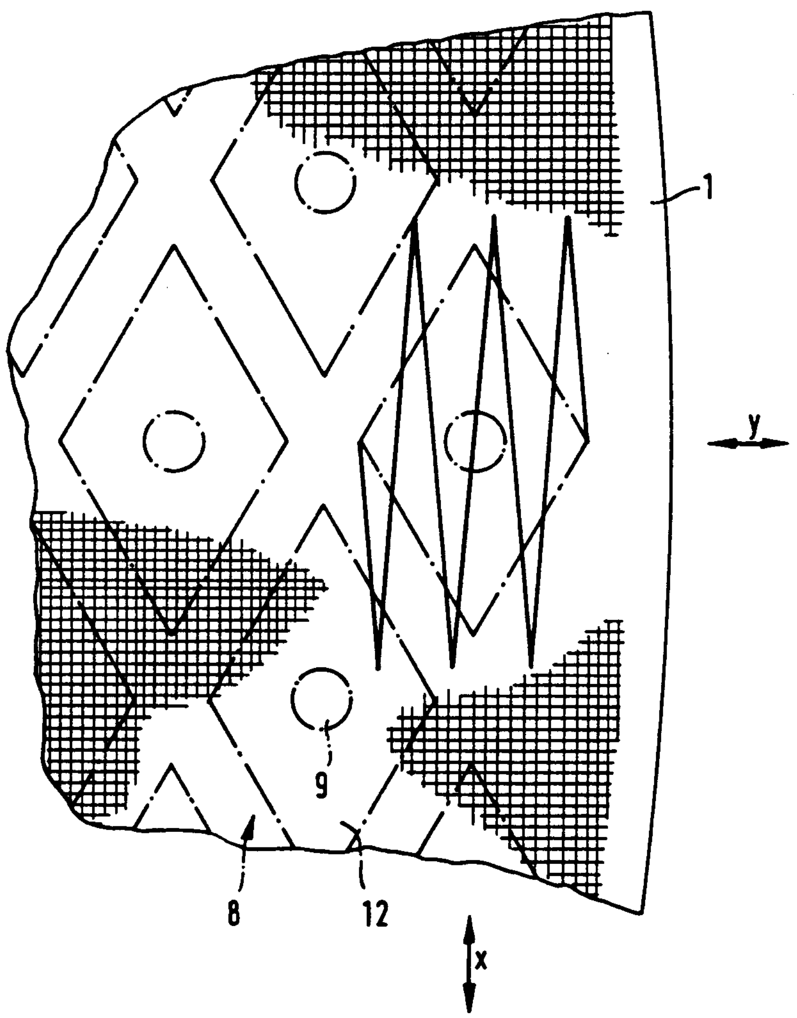


Fig. 5

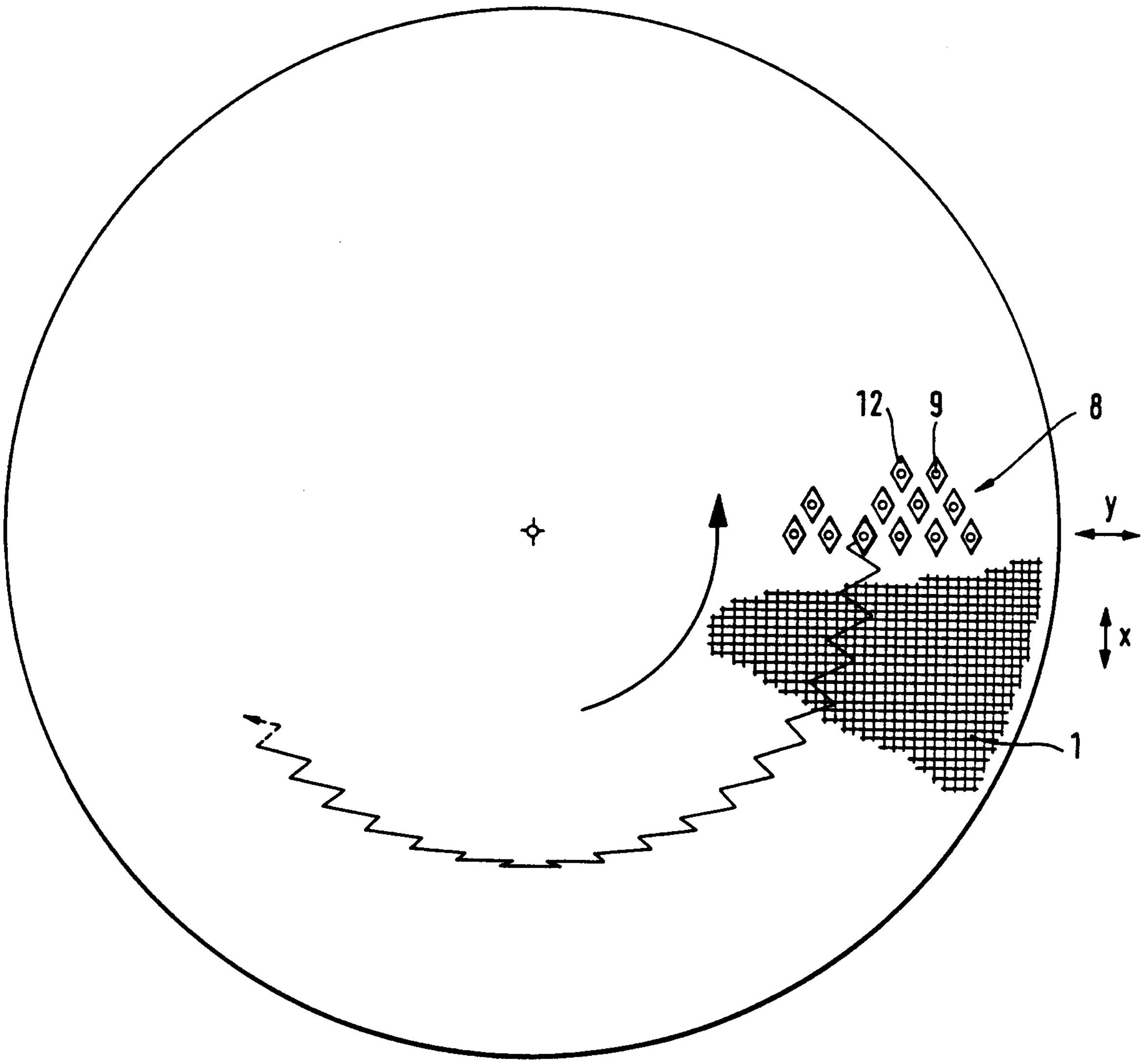


Fig. 6

Fig. 7

BEISPIEL 1

EDELMETALL-VERTEILUNG ÜBER DIE LÄNGSACHSE

GES.-EDELMETALL-GEHALT = 100 %

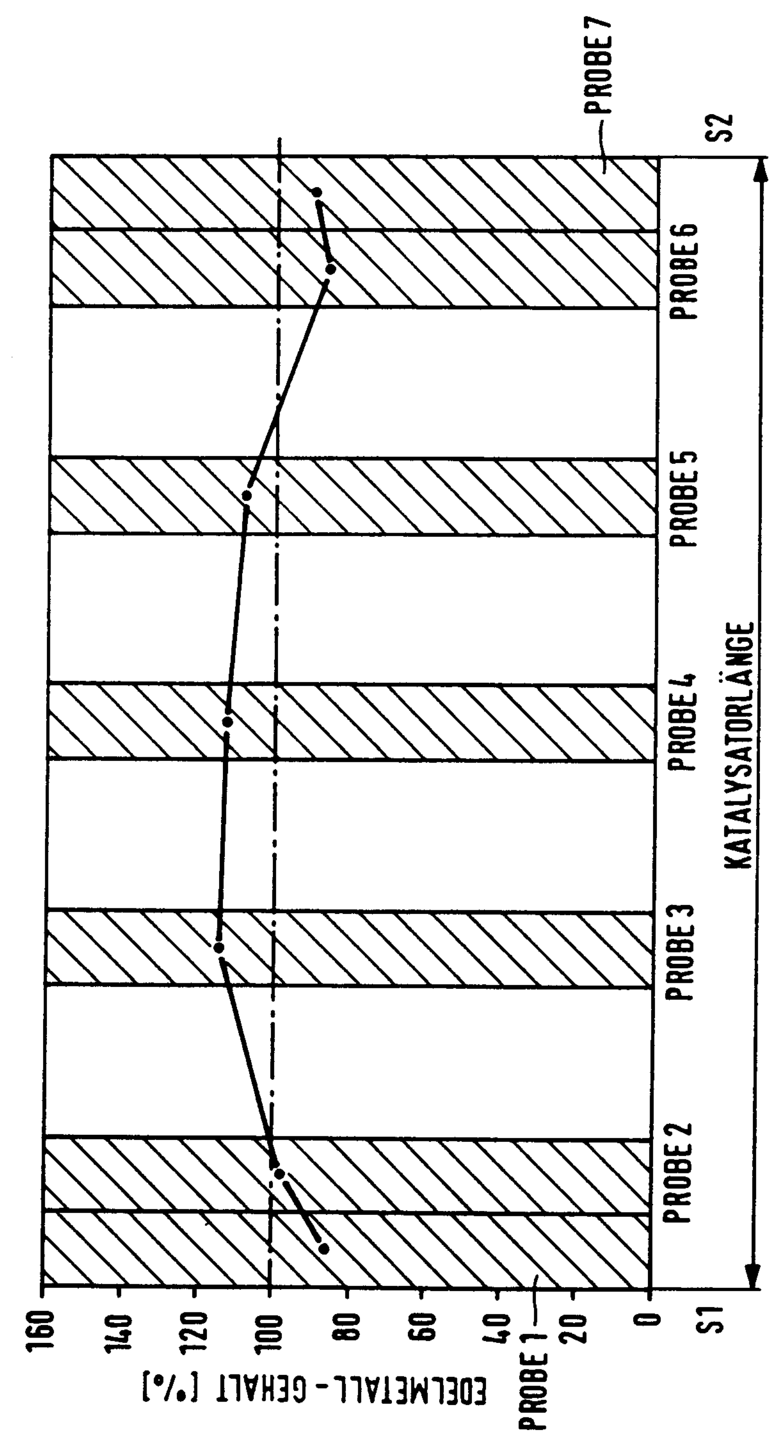

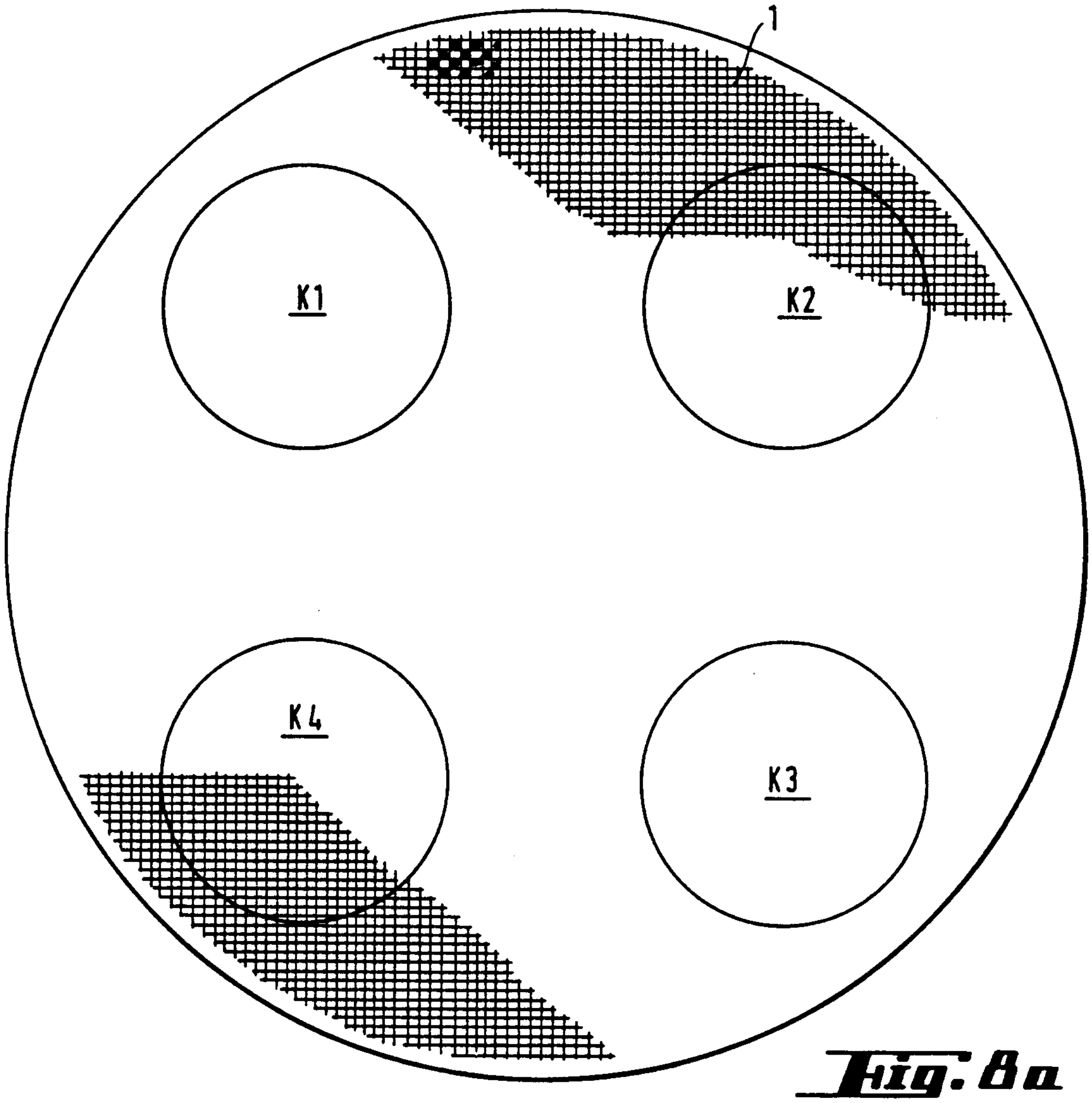


Fig. 8a

Fig. 8

BEISPIEL 1
EDELMETALL-VERTEILUNG, RADIAL
AUFGEBRACHTE MENGE = 100 %

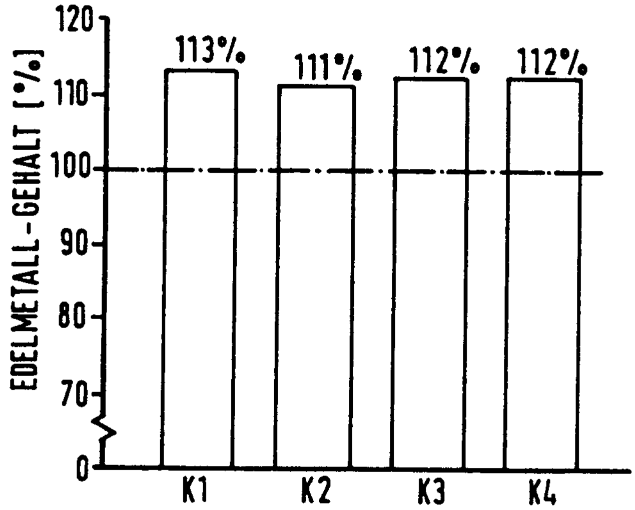

Fig. 9

BEISPIEL 2
LÄNGSVERTEILUNG $TiO_2$
MITTELWERT KATALYSATOR = 100 %

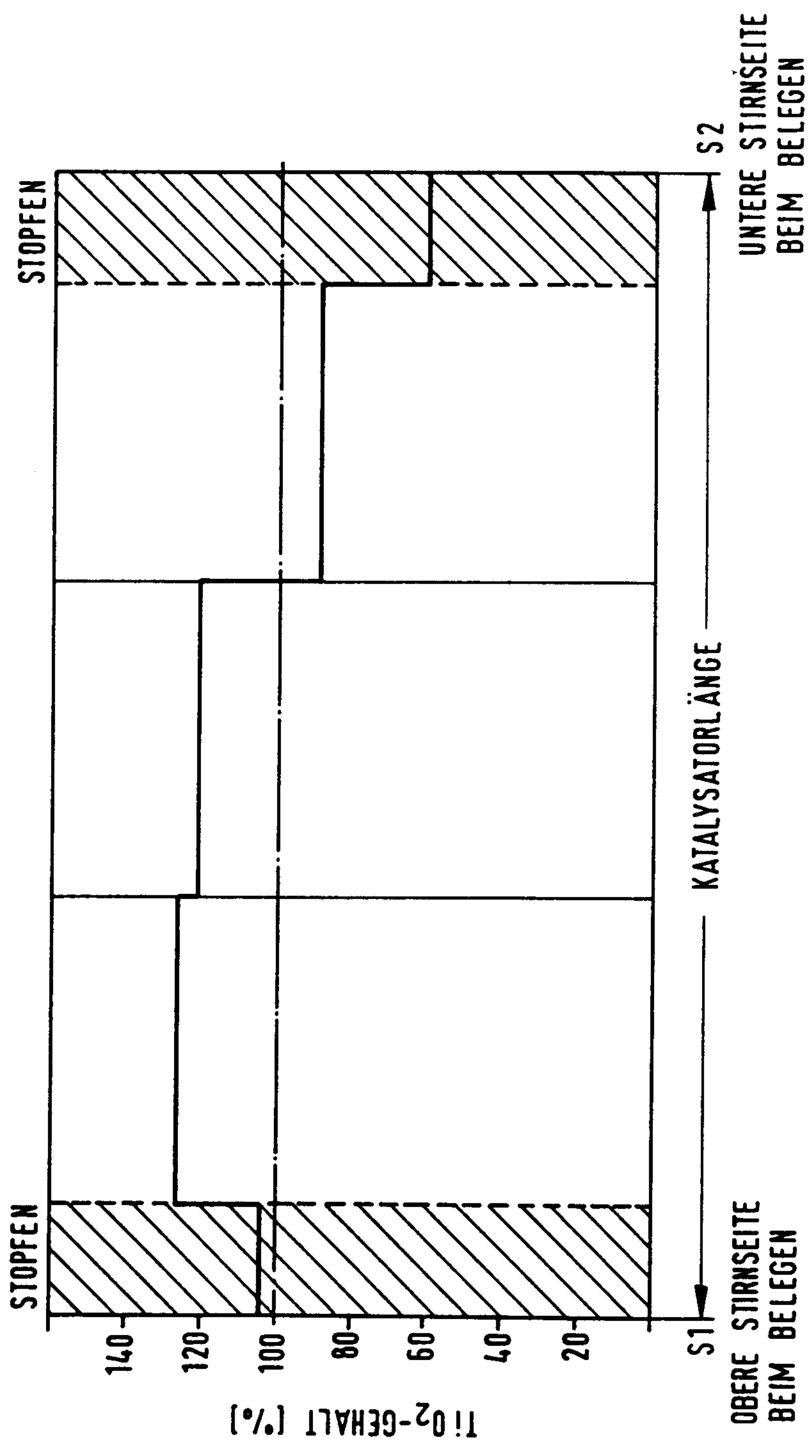

Fig. 10

BEISPIEL 2
LÄNGSVERTEILUNG Pt
MITTELWERT KATALYSATOR = 100%